Europäisches Patentamt

European Patent Office

Office européen des brevets

(11) Publication number: **0 058 082**
**A1**

# (12) EUROPEAN PATENT APPLICATION

(21) Application number: 82300626.7

(22) Date of filing: 09.02.82

(51) Int. Cl.³: **H 01 M 4/73**

(30) Priority: 09.02.81 US 232576

(43) Date of publication of application:
18.08.82 Bulletin 82/33

(84) Designated Contracting States:
BE NL SE

(71) Applicant: ESB INTERNATIONAL CORPORATION
2625 Concord Pike
Wilmington Delaware 19803(US)

(72) Inventor: Qureshi, Nawaz Muhammed
Box 207, RR No. 2 Washington Crossing
PA 18977(US)

(74) Representative: Dixon, Sarah et al,
c/o C H Greenstreet Thames House (Fifth Floor) Millbank
London SW1P 4QF(GB)

(54) Cast radial grid for batteries.

(57) A cast radial grid for supporting active mass in a lead-acid battery is disclosed. The grid (11) comprises a rectangular frame carrying a projecting lug (16) on the top member (12) of the frame. Within the frame are disposed a plurality of grid members which divide up the frame into a series of biscuit areas.

FIG. 1

Cast radial grid for batteries

This invention relates to a cast radial grid for supporting active mass in a lead-acid battery, and, more particularly, to a grid of the so-called offset lug design.

In conventional lead-acid batteries, each electrode consists of one or more plates, each of which is composed of a laminar grid surrounded by active material. Both positive and negative electrodes may be constituted by stacks of such grids pasted with the appropriate active material. Within each plate the grid serves both as a support for the active material and to conduct electricity to and from the active material. The grids are usually made from lead or a lead alloy containing small amounts of such metals as calcium, antimony or tin.

Many factors influence the design of battery grids and impose constraints which are mutually inconsistent so that the design of the grids is a compromise aimed at achieving an optimum combination of characteristics. Some important design-influencing factors are:

(a)          minimizing the grid weight;

(b)          minimizing the internal resistance of the grid;

(c)          ensuring ease of fabrication of the grid;

(d)          ensuring that the grid is sufficiently strong to support the required amount of active material; and

(e)          ensuring that the spaces in the grid are of adequate dimensions to provide the desired size of active material "biscuits" contained therein.

One known design for battery grids comprises a rectangular frame having a projecting lug at or near a corner thereof to constitute the current carrying connection of the grid , and a plurality of wires arranged orthogonally to divide the space within the frame into discrete rectangular pockets. Because higher currents are carried by wires near the lug, attempts have been made to improve the resistance characteristics of such grids by the use of tapering wires, increasing the number of wires running towards the lug and introducing some diagonal wires. One such improved grid is disclosed in U.S. Patent No. 3,989,539.

A different approach to improving the efficiency of battery grids involves using designs in which the pattern of wires within the frame is not orthogonal. U.S. Patent No. 3,452,145 discloses grids in which a first set of wires are disposed as radii emanating from the vicinity of the lug, while a second set of wires form arcs centred in the vicinity of the lug. A variation of this "radial" type of configuration is disclosed in U.S. Patent No. 3,690,950 in which an attempt is made to minimise the weight of the grid by using a frame and cross wires made of plastic together with a set of metallic fingers radiating from the lug to two sides of the frame. This type of grid requires more elaborate methods of fabrication than an all-metal grid which may be cast direct.

Another known design of battery grid, this time an all-metal grid has one set of wires running parallel to the top and bottom sides of the frame and one set of diverging wires connecting the top of the frame to the bottom of the frame or to the side of the frame remote from the lug. In this design the lug is positioned at a corner of the frame and the design will be referred to hereinafter as the "corner lug design".

However, it is generally preferable for the lug to be spaced from the corners of the grid because an improvement in performance as judged by power output at high current discharge rate may thus be obtained. This type of performance is particularly important in automotive batteries in which high available power for cold-cranking is .demanded. Offsetting the lug is also beneficial to the overall design and method of construction of batteries using the grid. When a battery is assembled, several grids are stacked together, a strap is attached to their lugs, and the stacks are positioned in the battery case with separating partitions therebetween. Connections then have to be made between pairs of straps separated by a partition. In the case of corner lug design grids, the straps to be interconnected are close to the battery casing, and for engineering reasons, this has necessitated resort to "risers" which are offset relative to the straps so that they are sufficiently spaced from the casing. Where the lugs themselves are offset from the grid corners, the straps to be interconnected in the battery are sufficiently spaced from the casing to allow a rectilinear connection through the partition which not only saves cost and weight, but also minimizes internal resistance.

If attempts are made to cast radial grids of essentially corner lug design but with the lugs offset, problems with the flow of lead or lead alloy are encountered which may give rise to porosity in the lug region of the frame. This is because a relatively large amount of lead has to flow from the fill edge to the lug region; grids are almost invariably cast in pairs with the fill edge being the side edge nearer to the lug. The result may be an unacceptably high rate of rejection of the castings.

An attempt has been made to overcome this problem in U.S. Patent No. 4,221,852. This patent discloses a cast radial grid comprising a rectangular frame consisting of top, bottom and side members and having a lug projecting from the top member of the frame intermediate to the centre point and one end thereof. A plurality of grid members or wires /is disposed within the frame.

We have now surprisingly found that this grid design may be further improved whilst retaining the advantage of good castability/ by geometrically arranging the grid members to minimise electrical resistance and maximise current flow paths to the lug.

According to the invention, therefore, the grid members comprise :

a)      a plurality of equally spaced horizontal members      each extending between and connecting the side frame members      ;

b)      a terminating member      extending from a point    in the range from 65% to 85% along the top frame member      from said one end thereof, toward and connecting with the bottom frame member      and intersecting the horizontal members      ;

c)      at least one member      extending parallel to the terminating member      from a point or points intermediate    the point      of intersection of the top frame member      with the terminating member and the end of the top frame member remote from the lug.

d)      a plurality of members  .   diverging obliquely downwardly from points spaced along the top frame member :     between the intersection      thereof with the terminating member      and the side      of the lug      remote from the terminating member which diverging members    . intersect at least one of the horizontal members      and connect the top frame member      with either the terminating member      or the bottom frame member  ·   ;

e)      at least one member      extending from a point or points on the top frame member intermediate the lug and the adjacent end of the top frame member obliquely downwardly toward the adjacent side member of the frame for a distance of about one-fifth of the height of the frame and then extending in a direction parallel to the nearest of the diverging members to the bottom frame member ; and

f) at least one member extending from a point or points on the side frame member adjacent the lug to the bottom frame member and intersecting some of the horizontal members .

The terms "top", "bottom", "vertical" and "horizontal" are used herein with reference to the orientation of the grid when it is in place in a battery. It is to be understood that terms such as "vertical" and "parallel" which have a precise mathematical meaning are not used herein in the precise sense.

The frame and grid members are cast as an integral unit in a single operation. Whilst pure lead may be used, the melt employed will usually be a lead-based alloy containing a small amount of calcium, antimony or tin.

It is advantageous to incorporate in the design of cast grids in accordance with the present invention the feature of increasing cross-sectional area of grid members and frame members in a direction toward the lug. Roughly, the cross-sectional area of grid members at or near the lug is preferably 30% to 50% greater than the cross-sectional area of the same grid members near the bottom of the grid. A similar cross-sectional area ratio applies to the top frame member and the side frame member adjacent the lug when comparing points near the lug and remote from the lug.

The invention will now be further described with reference to the accompanying drawings, in which:

Figure 1 shows a plan view of one form of grid of the invention; and

Figure 2 shows a plan view of another form of grid of the invention.

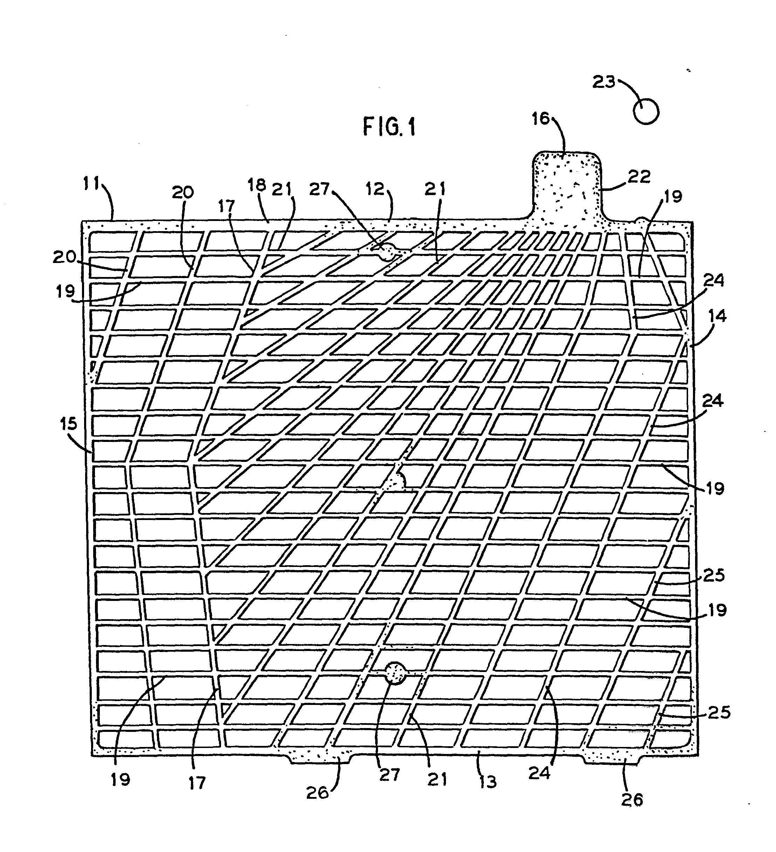

In Figure 1 there is shown a rectangular grid 11 having a top frame member 12, a bottom frame member 13, a first side member 14 and second side member 15. A lug 16 projects upwardly from a position on member 12 intermediate the centre thereof and the corner where side member 14 and top member 12 meet. A terminating member 17 extends from the top member 12 to the bottom member 13 from a point on the member 12 about 70% of the distance along the member 12 from the side member 14. The location of/18 may be varied by a total of about 10% i.e. may be in the range from 65 to 75% along member 12. From the point 18, the member 17 extends downwardly obliquely towards the adjacent side member 15 for roughly about half the height of the grid 11, and then extends downwardly obliquely towards the side member 14 nearer the lug until it terminates in the member 13. The member 17 intersects all of a series of horizontal grid members 19 which extend between and connect the side members 14 and 15. The members 19 are equally spaced. Another series of grid members 20 follow paths parallel to that of the terminating member 17 and may intersect the side member 15. A series of radiating or diverging wire members 21 extend from points on the top member 12 lying between the point 18 and that side 22 of the lug 16 remote from point 18. These points are spaced apart one from the other and the spacing generally increases in the direction from lug 16 towards the side member 15 remote from the lug. This increase in spacing may be better understood if one assumes that the members 21 are radii arising from one or more notional loci situated in area 23 outside the grid 11. Additional grid members 24 originate on the top member 12 at points spaced between the lug 16 and the adjacent side member 14. The members 24 initially slope downwardly from the top member 12 towards the adjacent side member 14 and then slope downwardly toward the remote side member 15 until they meet the bottom member 13. The side member 14 and the bottom member 13 are connected by grid members 25. All of the members 17, 20, 21, 24 and 25 intersect in a substantially flat manner with the horizontal members 19 so as to provide a thin, flat, matrix defining discrete biscuit areas. These biscuit areas, which in a battery would be filled with active mass, appear in the drawing as blank spaces within grid 11 and are sized approximately as taught by the art to give reasonable, low resistance, electronic current transfer between the active mass and the grid members.

The frame members 12 and 14 and the grid members 17, 20, 21 and 24 all increase in cross-sectional areas as they approach the lug 16. This increase in cross-sectional area, which is represented in the drawing by an increase in width, is about 30% based upon the area of any given member at that point thereon most remote from lug 16. The grid members are hexagonal in cross-section.

The grid 11 is additionally provided with feet 26 on the bottom frame member 13. Mould knock-out areas 27 are positioned across the grid.

It is an advantage of the presently disclosed grids that with very nearly the same electrical resistance as prior radial grids, the present grids are substantially lighter. Grid weight in one instance was reduced from 58 grams to an estimated weight of 51.5 grams (i.e. a weight reduction of about 11%) whilst the effective resistances were comparable at 1.05 mV/A and 1.11 mV/A respectively.

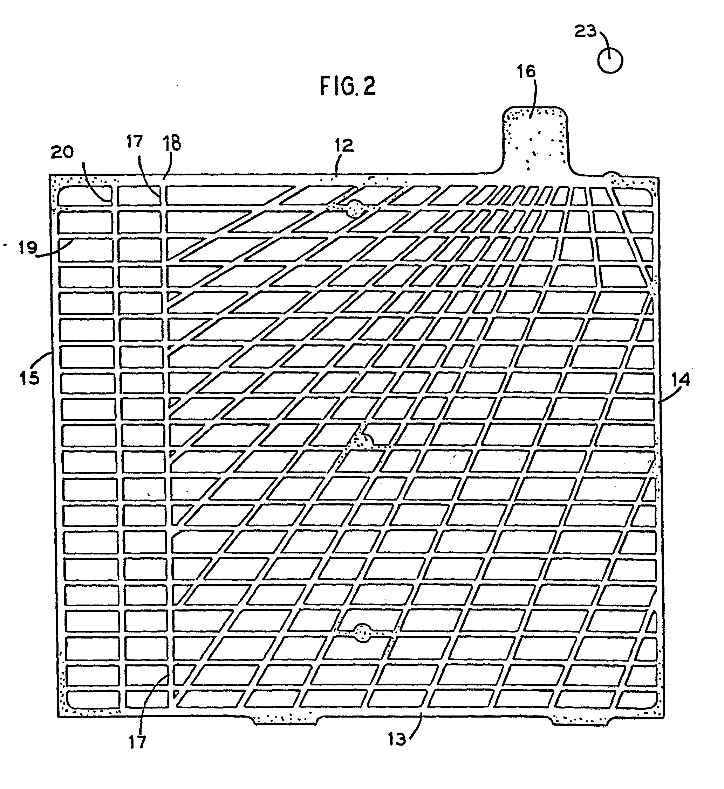

Another form of grid of the invention is shown in Figure 2. The grid of Figure 2 differs from that of Figure 1 in that the terminating member 17 in the grid of Figure 2 is a straight vertical member. Consequently, the single member 20 of the grid of Figure 2 is also vertical. In conjunction with the horizontal members 19 the members 17 and 20 divide the area of the grid to the left of member 17 into a multiplicity of rectangular biscuit areas. The point of origin 18 of the terminating member 17 is 80 to 85% along the top member 12 from the side member 14. The embodiment shown in Figure 2 is particularly preferred in that it is more readily castable than that of Figure 1 but has comparable electrical characteristics to the embodiment of Figure 1, and retains the weight reduction advantage mentioned above in connection with the grid of Figure 1.

Claims

1.          A cast radial grid (11) for supporting
active mass in a lead-acid battery comprising a
rectangular frame consisting of top (12), bottom (13)
and side (14, 15) members, a current-collecting lug
(16) projecting from the top member (12) of the frame
intermediate the centre point of the top frame member
and one end thereof, and a plurality of grid members,
characterised in that the grid members comprise:

a)          a plurality of equally spaced horizontal
members (19) each extending between and connecting
the side frame members (14, 15);

b)          a terminating member (17) extending from
a point (18) in the range from 65% to 85% along the top
frame member (12) from said one end thereof, toward
and connecting with the bottom frame member (13) and
intersecting the horizontal members (19);

c)          at least one member (20) extending
parallel to the terminating member (17) from a point
or points intermediate the point (18) of intersection
of the top frame member (12) with the terminating
member (17) and the end of the top frame member remote
from the lug (16);

d)          a plurality of members (21) diverging
obliquely downwardly from points spaced along the top
frame member (12) between the intersection (18) thereof
with the terminating member (17) and the side (22) of
the lug (16) remote from the terminating member which
diverging members (21) intersect at least one of the
horizontal members (19) and connect the top frame
member (12) with either the terminating member (17) or
the bottom frame member (13);

e)          at least one member (24) extending from a
point or points on the top frame member intermediate
the lug (16) and the adjacent end of the top frame
member (12) obliquely downwardly toward the adjacent side member (14) of the frame for a distance of about one-fifth of the height of the frame and then extending in a direction parallel to the nearest of the diverging members (21) to the bottom frame member (13); and

f)      at least one member (25) extending from a point or points on the side frame member (14) adjacent the lug (16) to the bottom frame member (13) and intersecting some of the horizontal members (19).

2.      A grid as claimed in claim 1 characterised in that the terminating member (17) and the member or members (20) parallel thereto extend obliquely downwardly towards the side frame member (15) remote from the lug (16) for about half the height of the frame and then extend obliquely downwardly towards the side frame member (14) adjacent the lug, and in that the terminating member (17) originates from a point (18) not more than 75% along the top frame member (12) from said one end thereof.

3.      A grid as claimed in claim 1 characterised in that the terminating member (17) and the member or members (20) parallel thereto extend vertically between the top and bottom frame members (12, 13) and in that the terminating member originates from a point in the range from 80% to 85% along the top frame member from said one end thereof.

4.      A grid as claimed in any preceding claim characterised in that the grid member or members e) extend obliquely downwardly toward the adjacent side member of the frame for a distance of 20% of the height of the frame.

5.      A grid as claimed in any preceding claim characterised in that the grid members d) and e) increase in cross-sectional area in the direction from the bottom of the frame to the top of the frame.

6.      A grid as claimed in any preceding claim, characterised in that the cross-sectional area of the top frame member (12) increases along its length from the end remote from the lug (16) to the end adjacent the lug.

7.      A grid as claimed in any preceding claim, characterised in that the cross-sectional area of the side frame member (14) adjacent the lug increases along its length from the bottom of the frame to the top of the frame.

FIG.1

FIG. 2

**0058082**

Application number

EP 82300626.7

## EUROPEAN SEARCH REPORT

European Patent Office

| DOCUMENTS CONSIDERED TO BE RELEVANT | | |
|---|---|---|
| Category | Citation of document with indication, where appropriate, of relevant passages | Relevant to claim |
| A | US - A - 3 453 145 (DUDDY) <br> * Fig. 2 * | 1 |
| | -- | |
| A | US - A - 1 129 690 (KNOBLOCH) <br> * Fig. 1 * | 1 |
| | -- | |
| A | US - A - 1 044 831 (WACKWITZ) <br> * Fig. 3 * | 1 |
| | ---- | |

**CLASSIFICATION OF THE APPLICATION (Int. Cl. 3)**

H 01 M 4/73

**TECHNICAL FIELDS SEARCHED (Int.Cl. 3)**

H 01 M

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons
&: member of the same patent family, corresponding document

| | | | |
|---|---|---|---|
| X | The present search report has been drawn up for all claims | | |
| Place of search | Date of completion of the search | Examiner | |
| VIENNA | 14-05-1982 | LUX | |

EPO Form 1503.1 06.78